# EUROPÄISCHE PATENTSCHRIFT

(11) **EP 2 282 933 B1**
(45) Veröffentlichungstag und Bekanntmachung des Hinweises auf die Patenterteilung: **07.03.2012**
(21) Anmeldenummer: 09761568.6
(22) Anmeldetag: 14.05.2009
(51) Int. Cl.: B64D 11/00

(54) **ANORDNUNG ZUM UNTERTEILEN EINES RAUMS IN MEHRERE BEREICHE**
ARRANGEMENT FOR DIVIDING A SPACE INTO A PLURALITY OF AREAS
SYSTÈME POUR DIVISER UN ESPACE EN PLUSIEURS ZONES

(30) Priorität: 28.05.2008 DE 102008025390; 28.05.2008 US 130134
(43) Veröffentlichungstag der Anmeldung: 16.02.2011
(73) Patentinhaber: Airbus Operations GmbH, 21129 Hamburg (DE)
(72) Erfinder: HÄRTEL, Sven, 28201 Bremen (DE); WENDT, Volkhard, 28844 Weyhe (DE)
(74) Vertreter: Maiwald Patentanwalts GmbH
(86) Internationale Anmeldenummer: PCT/EP2009/055875
(87) Internationale Veröffentlichungsnummer: WO 2009/150005

(56) Entgegenhaltungen:
- DE-B3- 10 314 890
- DE-U1- 20 106 547
- US-A1- 2007 018 044
- US-B1- 6 523 779

## Beschreibung

Die vorliegende Anmeldung beansprucht die Priorität der US Provisional Patentanmeldung Nr. 61/130,134, eingereicht am 28. Mai 2008 und der deutschen Patentanmeldung Nr. 10 2008 025 390.1, eingereicht am 28. Mai 2008.

### TECHNISCHES GEBIET

Die Erfindung betrifft eine Anordnung zum Unterteilen eines Raums in mehrere Bereiche.

### HINTERGRUND DER ERFINDUNG

Anordnungen zum Unterteilen eines Raums in mehrere Bereiche sind hinlänglich bekannt. Bei der im folgenden beschriebenen Erfindung wird insbesondere eine Anordnung zum Unterteilen eines Raums näher beleuchtet, die bedarfsweise in einen Raum eingesetzt werden kann und eine weitgehende thermische Trennung zwischen voneinander separierten Bereichen zum Ermöglichen unterschiedlicher Raumklimate schafft.

Zum Unterteilen eines Raums - beispielsweise könnte dies eine Kabine oder ein Frachtraum eines Fahrzeugs sein - werden im Stand der Technik wandartige Anordnungen verwendet. Es sind auch Anordnungen bekannt, die den freien Querschnitt eines Flugzeugfrachtraums vollständig überdecken und den Durchtritt von Rauch von einem Bereich in den benachbarten Bereich im Wesentlichen verhindern. Der Einbau solcher Anordnungen ist relativ aufwändig, da häufig separate Halterungen am Fußboden oder an den Wänden des Frachtraums angeordnet werden müssen, an die ein oder mehrere plattenartige Bauteile zu befestigen sind. Die Größe dieser Bauteile ist von der Größe der Zutrittsöffnungen des Frachtraums abhängig, denn zu große Bauteile können nicht in den Raum hineintransportiert werden. Kleine Zutrittsöffnungen könnten daher eine Unterteilung der zu montierenden Anordnung zum Unterteilen des Raums notwendig machen. Zudem würde der Zusammenbau der plattenartigen Bauteile in Räumen mit ausgeprägter Raumhöhe zumindest eine Leiter und häufig auch eine zweite den Zusammenbau durchführende Person zum Anreichen und Halten von Bauteilen, Befestigungsmaterial und Werkzeug erfordern.

Beim Beispiel des Flugzeugfrachtraums bleibend ist es erforderlich, zur Erhöhung der Wirtschaftlichkeit die Dauer von Bodenaufenthalten des Flugzeugs zu minimieren. Sollte es notwendig sein, mehrere Bereiche des Frachtraums beim Transport unterschiedlicher Güter räumlich und thermisch voneinander zu separieren, ist ein schneller Einbau oder Ausbau von Anordnungen zum Unterteilen des Frachtraums gewünscht. Nach Anbringen derartiger Anordnungen könnten in einem ersten Bereich des Frachtraums Güter transportiert werden, welche eine niedrigere oder höhere Temperatur, einen höheren oder niedrigeren Frischluftanteil und dergleichen benötigen als in einem zweiten Bereich.

Im Falle eines thermisch nicht unterteilten Frachtraums wäre es mit heutigen Flugzeugen üblicherweise möglich, verschiedene Klimatisierungszonen zu schaffen, denn üblicherweise sind die Klimatisierungssysteme eines Flugzeugs dafür eingerichtet. Es stehen getrennte Regelkreise zur Verfügung, die das Versorgen mehrerer Zonen eines Frachtraums mit unterschiedlich konditionierter Luft ermöglichen. In dem Übergang zwischen zwei benachbarten Zonen entsteht ohne thermische Unterteilung bei unterschiedlicher Klimatisierung jedoch jeweils ein ausgeprägter Bereich, in dem sich Luft aus den benachbarten Zonen mit unterschiedlichen Zuständen vermischen. In diesen Übergangsbereichen kann keine exakte Regelung des jeweiligen Klimatisierungszustandes erfolgen.

In US 6 523 779 B1 wird eine Klassentrennvorrichtung für eine Kabine eines Flugzeugs gezeigt, die in verschiedenen Positionen von parallel zueinander verlaufenden Führungsschienen, die sich entlang der Längsachse des Flugzeugs erstrecken, arretiert werden kann.

Würde eine Anordnung zum Unterteilen eines Raums in vorangehend geschilderter Bauweise verwendet werden, würde dies einen erhöhten Einbau- bzw. Integrationsaufwand erfordern, der unmittelbar vor einem Flug anfallen würde. Innerhalb einer angestrebten sog. Turnaround-Zeit von 90 Minuten, in der das Flugzeug entladen und wieder beladen wird, wäre der Einbau nicht möglich, da beim Einbau die Beladung des Flugzeugs ausgesetzt werden müsste. Dies hat zur Folge, dass während des Einbaus einer derartigen Unterteilung eine Beladung des Frachtraums in den nachfolgenden Bereichen nicht durchgeführt werden kann. Ein Durchschieben von Frachtcontainern wäre aufgrund des Platzbedarfs für den Einbau nicht möglich. Dies verlängert insgesamt die Zeit des Bodenaufenthalts des Flugzeugs und verschlechtert damit die Wirtschaftlichkeit des Flugzeugs.

### ZUSAMMENFASSUNG DER ERFINDUNG

Die Aufgabe der Erfindung ist daher, einen oder mehrere der genannten Nachteile zur verringern oder gänzlich zu eliminieren. Insbesondere ist die Aufgabe der Erfindung, eine Anordnung zum Unterteilen eines Raums in mehrere Bereiche vorzuschlagen, die einen Ein- und Ausbau möglichst ohne Hilfsmittel und in relativ kurzer Zeit ermöglicht. Die Anordnung sollte zudem weitestgehend unabhängig von flugzeugseitigen Einbauten sein und damit kein Mehrgewicht im Basisflugzeug verursachen. Schließlich sollte die Anordnung außerdem für den Fall des Nichtgebrauchs ein möglichst geringes Stauvolumen und ein geringes Eigengewicht aufweisen.

Die Erfindung löst die Aufgabe durch eine Anordnung zum Unterteilen eines Raums in mehrere Bereiche, die mindestens einen Rahmen mit mindestens einem Befestigungsmittel zum Haltern des Rahmens in korrespondierenden Rahmenaufnahmen und mindestens ein faltbares Begrenzungsmittel aufweist, wobei der Rahmen so ausgebildet ist, dass sich die Anordnung im befestigten Zustand im Wesentlichen an eine oder mehrere Wände des Raums anschmiegt, wobei sich das faltbare Begrenzungsmittel an dem Rahmen haltern lässt und eine Luftströmung zwischen durch die Anordnung separierter benachbarter Bereiche des Raums im Wesentlichen verhindert.

Durch die erfindungsgemäße Anordnung wird eine thermische Abtrennung von mehreren Bereichen bzw. Zonen in einem Raum geschaffen, die sich leicht installieren und auch leicht wieder entfernen lässt. Das faltbare Begrenzungsmittel, welches beispielsweise aus einem Textil, einem anderen textilartigen Gewebe, einer Folie, einer Plane oder einem anderen roll- und/oder faltbaren Material hergestellt sein könnte, kann bevorzugt zusammengefaltet einstückig in den Raum transportiert, auseinandergefaltet und an dem Rahmen aufgehängt werden. Der Rahmen und das Begrenzungsmittel sind an die Konturen der Räume angepasst, in denen die erfindungsgemäße Anordnung verwendet werden soll. Aufgrund der möglichen Verwendung eines textilartigen Gewebes kann das Begrenzungsmittel mit einem relativ geringen spezifischen Gewicht ausgeführt werden, so dass der Rahmen keine besonders hohen Gewichtskräfte aufnehmen muss. Zudem sind dadurch auch die Trägheitskräfte des Begrenzungsmittels relativ gering, so dass insbesondere ein in einem Flugzeugfrachtraum eingesetzter Rahmen der erfindungsgemäßen Anordnung nur relativ gering belastet wird.

Insgesamt wird damit eine leichte und transportable Anordnung geschaffen, die vollständig den Querschnitt des Raums ausfüllt und eine Luftströmung zwischen den voneinander separierten Raumbereichen verhindert. Dadurch sind unterschiedliche Klimazonen in den voneinander separierten Bereichen ohne Durchmischungseffekte im Übergang zwischen den Bereichen realisierbar.

In einer vorteilhaften Weiterbildung der erfindungsgemäßen Anordnung sind die Rahmenaufnahmen im Bereich des Bodens des Raums angeordnet. Die Rahmenaufnahmen könnten als Ösen, Hülsen, Stifte oder ähnliches ausgeführt sein, während die Befestigungsmittel eines beispielsweise bogenförmigen Rahmens auch ein zapfenförmiges Ende sein könnten. Dieses sich verjüngende Ende des Rahmens könnte in einer Rahmenaufnahme durch einfaches Stecken befestigt werden. Rahmenaufnahmen könnten allerdings auch so ausgeformt sein, dass ein Befestigen des Rahmens auch ohne unmittelbares Erreichen der Rahmenaufnahmen ermöglicht wird, etwa durch eine trichterförmige Rahmenaufnahme. Durch Anordnen der Rahmenaufnahmen in Bodennähe kann der Rahmen am Boden des Raums befestigt werden, wodurch sich eine Leiter zum Anbringen der erfindungsgemäßen Anordnung im Wesentlichen erübrigt. Da außerdem der Rahmen aufgrund der relativ geringen auftretenden Belastung keinen besonders großen Querschnitt aufweisen muss, könnte außerdem eine Befestigung der erfindungsgemäßen Anordnung durch eine einzelne Person erfolgen.

In einer bevorzugten Ausführungsform der erfindungsgemäßen Anordnung lassen sich die Rahmenaufnahmen in bereits im Boden des Raums vorhandenen Schienen einbringen und befestigen, so dass zum Positionieren der Rahmenaufnahmen innerhalb des Raums keine besonderen Vorarbeiten durchzuführen sind. Weiterhin ist das Anbringen der erfindungsgemäßen Anordnung dadurch sehr flexibel. Beispielsweise befinden sich in Frachträumen von Flugzeugen Befestigungsschienen zum Arretieren von Frachtcontainern, die in Abständen von üblicherweise 1 Zoll Befestigungsausnehmungen aufweisen, in denen die Rahmenaufnahmen befestigt werden könnten.

Bei einer bevorzugten Weiterbildung der erfindungsgemäßen Anordnung ist der Rahmen elastisch ausgeführt. Der bevorzugt vorgeformte Rahmen verformt sich dadurch nach Einbringen in den Raum günstigenfalls so, dass er sich an eine oder mehrere Wände des Raums anschmiegt und dadurch die Querschnittsfläche des Frachtraums möglichst vollständig ausfüllt. Soll die erfindungsgemäße Anordnung beispielsweise in einem Frachtraum eines Flugzeugs angeordnet werden, so weist dieser üblicherweise einen kreissegmentförmigen oder kreisabschnittförmigen Querschnitt auf. Der elastische Rahmen könnte demnach so ausgestaltet sein, dass er sich in einem kreissegmentförmigen Raum über die gesamte Wandfläche an die Wand anschmiegt, während er mit beiden Enden im Bodenbereich des Raums befestigt ist.

In einer vorteilhaften Ausführungsform weist die erfindungsgemäße Anordnung eine Stabilisierungseinrichtung in Form eines Stützrahmens auf, der gegenüber dem Rahmen versetzt angeordnet ist. Werden beispielsweise der Rahmen und der Stützrahmen als Rahmenbögen realisiert, könnten sich diese beiden Elemente verbinden lassen und sich so gegenseitig abstützen. Dadurch könnte eine Befestigung der erfindungsgemäßen Anordnung bodenseitig bereits eine ausreichende Stabilität erbringen.

In einer vorteilhaften Weiterbildung der erfindungsgemäßen Anordnung ist der Stützrahmen um eine im Raum verlaufende Hochachse relativ zum Rahmen um einen vorbestimmten Winkel rotiert angeordnet. Dadurch können der Rahmen und der Stützrahmen an ihrem oberen Scheitelpunkt verbunden werden und eine Stabilisierung der Anordnung wie bei kuppelförmigen Zelten erzeugen. Dadurch benötigt die erfindungsgemäße Anordnung keine weitere Befestigung an der Struktur des Raums.

Bei einer weiteren vorteilhaften Ausführungsform der erfindungsgemäßen Anordnung ist der Rahmen aus mehreren Segmenten ausgeführt, welche sich zum Transport des Rahmens voneinander trennen lassen.

Bei einer zusätzlichen Weiterbildung der erfindungsgemäßen Anordnung ist außerdem der Rahmen dazu eingerichtet, sich zum Abstützen zumindest bereichsweise in mindestens ein Halterelement einbringen zu lassen, welches innerhalb des Raums angeordnet ist. Das Halterelement könnte sich beispielsweise an der Decke des Raums befinden, in das der Rahmen eingehakt, eingesteckt, eingeklinkt, eingeschoben oder auf andere Weise in form- oder kraftschlüssige Verbindung gebracht werden kann. Es ist denkbar, dass sich mehrere solcher Halterelemente innerhalb des Raums befinden, die beispielsweise in äquidistanter Weise angeordnet sind.

In einer besonders bevorzugten Ausführungsform ist das Halterelement als ein Profilbauteil mit einer Vertiefung ausgeführt. Dadurch kann der Rahmen der erfindungsgemäßen Anordnung in die Vertiefung geschoben werden. Der Rahmen wird dann durch die Flanken bzw. Seitenwände der Vertiefung gestützt. Denkbar ist ein U-Profil, das zwei im Wesentlichen parallele oder leicht winklig zueinander angeordnete Seitenwände aufweist, gegen die sich ein Rahmen abstützen kann. Das U-Profil könnte an der Decke des Raums angeordnet werden, wobei die Öffnung des Profils zum Boden des Raums gerichtet ist. Nach Einbringen des Rahmens in den Raum oder des Zusammensteckens der Rahmensegmente zu einem Rahmen innerhalb des Raums kann der anschließend mit dem Begrenzungsmittel bestückte und teils aufgerichtete Rahmen mit einem an der Raumdecke befindlichen Halterelement durch Einschieben vom Boden aus in Verbindung gebracht und schließlich mittels der Befestigungsmittel an korrespondierenden bodenseitigen Rahmenaufnahmen befestigt werden. Dadurch ist die Installation einfach zu bewerkstelligen, erfordert keine Hilfsmittel wie eine Leiter oder dergleichen und kann dadurch bevorzugt von einer einzelnen Person durchgeführt werden.

Schließlich weist das Begrenzungsmittel einer vorteilhaften Ausführungsform der erfindungsgemäßen Anordnung Schlaufen, Taschen, Röhren oder dergleichen zum Befestigen des Begrenzungsmittels an dem Rahmen durch Einfädeln des Rahmens in diese kanalartigen Haltemittel auf. Bevorzugt könnten derartige Haltemittel durch einen Hohlsaum des Begrenzungsmittels realisiert werden. Dadurch sind keine separaten Befestigungsmittel zum Befestigen des Begrenzungsmittels an dem Rahmen notwendig und der Aufbau einer demontierten erfindungsgemäßen Anordnung, das Demontieren und das Verstauen einer nicht benötigten erfindungsgemäßen Anordnung ist entsprechend einfach.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und der Figuren. Dabei bilden alle beschriebenen und/oder bildlich dargestellten Merkmale für sich und in beliebiger Kombination den Gegenstand der Erfindung auch unabhängig von ihrer Zusammensetzung in einzelnen Ansprüchen oder deren Rückbeziehung. In den Figuren stehen gleiche Bezugszeichen für gleiche Objekte. Es zeigen:
- Fig. 1:: eine dreidimensionale Ansicht eines ersten Ausführungsbeispiels der erfindungsgemäßen Anordnung;
- Fig. 2a-d:: Details des ersten Ausführungsbeispiels der erfindungsgemäßen Anordnung in dreidimensionaler Ansicht;
- Fig. 3:: die erfindungsgemäße Anordnung in eingebautem Zustand;
- Fig. 4:: Detailansicht eines oberen Befestigungsmittels der erfindungsgemäßen Anordnung;
- Fig. 5:: zweites Ausführungsbeispiel der erfindungsgemäßen Anordnung.

### DETAILLIERTE BESCHREIBUNG BEVORZUGTER AUSFÜHRUNGSBEISPIELE

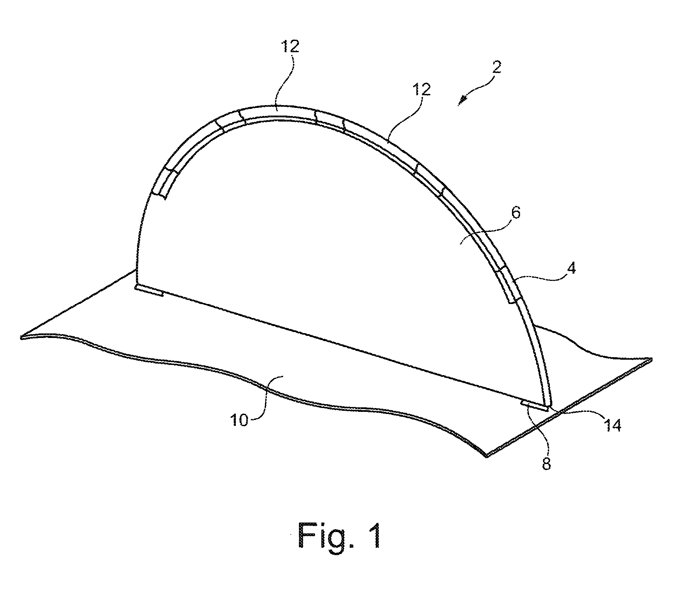

In Fig. 1 wird die erfindungsgemäße Anordnung 2 gezeigt, die einen Rahmen 4, ein Begrenzungsmittel 6 und Befestigungsmittel 8 aufweist und auf einem Fußboden 10 eines Frachtraums eines Flugzeugs steht. Die obere Seite der erfindungsgemäßen Anordnung 2 weist eine Kreisbogenform auf, während die Unterseite im Wesentlichen gerade ist und parallel zum Fußboden 10 verläuft. Das Befestigungsmittel 6 ist als eine Plane, ein Nylongewebe bzw. ein anderer geeigneter Stoff ausgeführt, der mit mehreren taschenartigen Halterungen 12 ausgestattet ist, durch die sich der Rahmen 4 erstreckt. An den Enden des Rahmens 4 befinden sich Befestigungsmittel 14, die mit korrespondierenden Rahmenaufnahmen, welche beispielsweise im Fußboden 10 angeordnet sind, verbunden werden.

Durch die relativ schlanke Ausführung des Rahmens 4 und dessen bevorzugt elastischer Bauweise ist es möglich, den Rahmen 4 relativ leicht in den Frachtraum eines Flugzeugs hineinzubringen. Dort kann er von einer vorgebogenen Form in die gewünschte Form gebracht werden, so dass sich der Rahmen 4 an einer Wandung der Kabine anschmiegt. Durch das am Rahmen 4 angeordnete Begrenzungsmittel 6 entsteht eine Wand, durch die im Wesentlichen eine Luftströmung zwischen zwei benachbarten und voneinander separierten Bereichen bzw. Zonen im Frachtraum vermieden wird. Zwar befinden sich zwischen den einzelnen taschenartigen Halterungen 12 luftdurchlässige Löcher zwischen dem Rahmen 4 und dem Begrenzungsmittel 6, diese sind im Verhältnis zur überspannten Querschnittsfläche jedoch im günstigen Fall so klein, dass bei üblichen Luftaustauschraten im Flugzeug praktisch keine Querströmung zwischen den voneinander separierten Zonen eintritt.

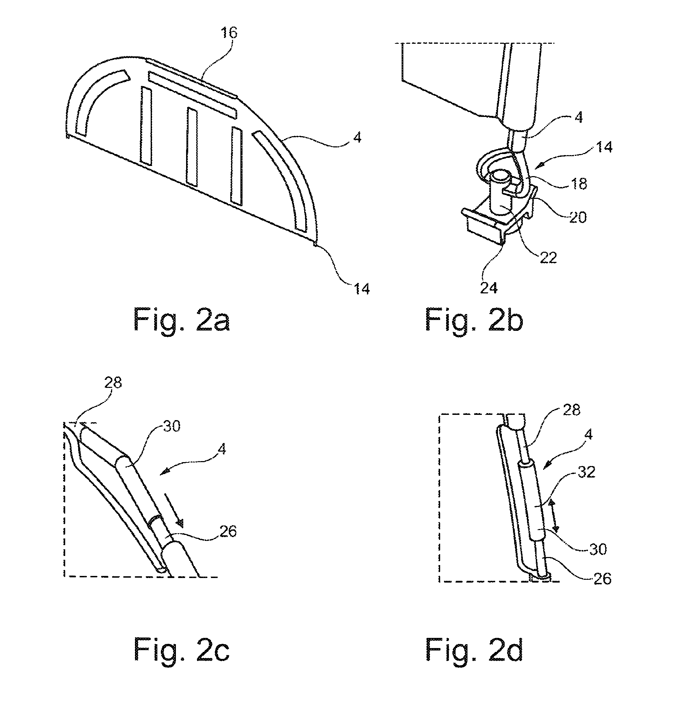

Wie in Fig. 2a dargestellt, ist nicht zwingend notwendig, dass der Rahmen 4 eine vollständige Kreisbogenform aufweist. Hier wird davon ausgegangen, dass an der Oberseite des Frachtraums ein abgeflachter Deckenbereich vorliegt, in dem etwa diverse Leitungen von einem Bereich des Flugzeugs in einen anderen Bereich des Flugzeugs verlaufen. Dieser Bereich ist mit einer Verkleidung versehen, die sich beispielsweise parallel zum Fußboden 10 des Frachtraums erstreckt. Aus diesem Grunde könnte ein Rahmen 4 auch eine abgeflachte Oberseite 16 aufweisen, die so ausgeführt ist, dass der Rahmen 4 in eingebautem Zustand an den Wandflächen des Raums und an den Deckenbereich anschließt.

Ein mögliches Befestigungselement 14 wird in Fig. 2b näher gezeigt. Dort ist ein Rahmen 4 zu sehen, der an einem Ende eine Öse 18 aufweist, die in einer Bohrung 20 eines Stifts 22 gehaltert ist. Der Stift 22 befindet sich wiederum in einem Verriegelungselement 24, wie es beispielsweise in ähnlicher Form zum Arretieren von Verzurr- (Tie Down)-Befestigungen für Netze in Frachträumen von Flugzeugen verwendet wird. Dieses Verriegelungselement 24 lässt sich in eine Rahmenaufnahme in Form einer nicht dargestellten Bohrung einer ebenfalls nicht gezeigten Fußboden- bzw. Sitzschiene einbringen, die etwa entsprechend der Norm AS 33601 ausgestaltet sein könnte, um einen gewissen Betrag verschieben und an der erreichten Stelle arretieren. Auf diese Weise ist es möglich, den Rahmen 4 an zwei Enden zu haltern. Dabei ist zu bemerken, dass die Befestigungsmittel 14 möglichst weit außen an dem Fußboden 10 angeordnet sein sollten, so dass ein möglichst vollständiges Anschmiegen des Rahmens 4 an die Kontur des Frachtraums erfolgen kann. Eine Vielzahl weiterer Rahmenaufnahmen ist denkbar und die Erfindung beschränkt sich nicht auf die Kombination aus Verriegelungselement 24 und Öse 18. So könnte etwa der Rahmen 4 spitz zulaufende Enden aufweisen, die in Aufnahmebohrungen oder trichterförmige Halter gesteckt werden können. Die Rahmenenden könnten auch ein hinterschnittenes Profil zum Einnehmen einer Schnappverbindung mit einem Riegel aufweisen, der in einer Aufnahmebohrung oder dergleichen angeordnet ist. Sämtliche form- oder kraftschlüssige lösbare Verbindungsmittel sind zum Realisieren einer Rahmenaufnahme geeignet.

Fig. 2c stellt dar, dass ein Rahmen 4 auch aus mehreren Segmenten aufgebaut sein kann. Beispielhaft werden zwei benachbarte Segmente 26 und 28 dargestellt, die an ihrer Stoßstelle über eine Aufnahmehülse 30 miteinander verbunden sind, wobei die Aufnahmehülse bevorzugt an einem der beiden Segmente 26 oder 28 fest montiert ist.

Schließlich wird in Fig. 2d eine mögliche Verbindung zwischen zwei Segmenten 26 und 28 des Rahmens 4 in Form von einer Zugfeder 32 dargestellt. Dies erleichtert die Installation, denn die Segmente müssen nicht manuell ausgerichtet und dann zusammengesteckt werden, sondern das Zusammenstecken geschieht im Wesentlichen von alleine.

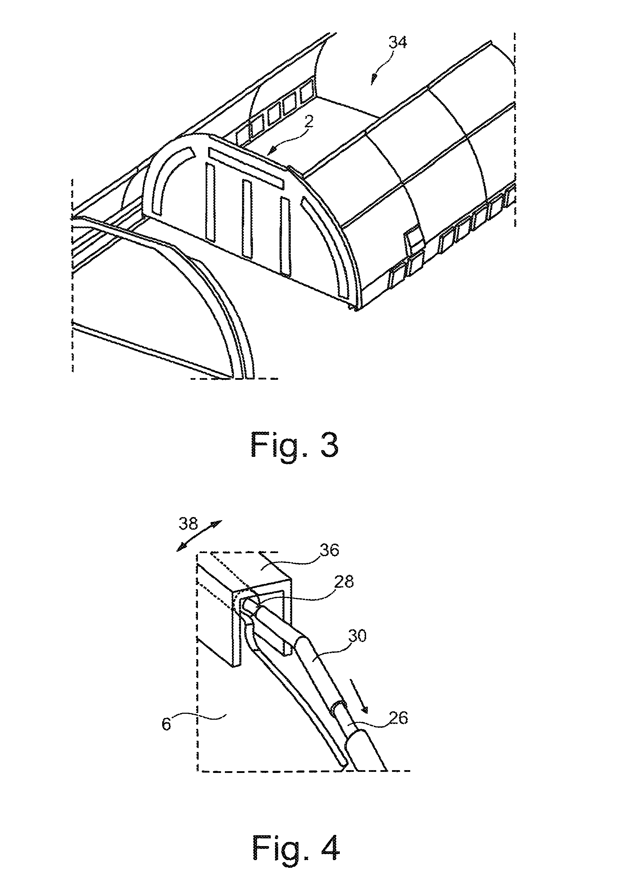

Fig. 3 zeigt anschaulich eine Einbauposition der erfindungsgemäßen Anordnung 2 in einem Frachtraum 34 eines Flugzeugs, wobei auch in diesem dargestellten Falle die Oberseite der erfindungsgemäßen Anordnung 2 einen abgeflachten Bereich 16 aufweist.

In Fig. 4 wird dargestellt, dass dieser abgeflachte Bereich 16 in vorteilhafter Weise auch in ein entsprechend geformtes Profilbauteil 36 eingesteckt werden kann, das in diesem Fall beispielhaft als U-Profil ausgeführt ist. Auf diese Weise kann die erfindungsgemäße Anordnung 2 in Längsrichtung 38 des Frachtraums fixiert werden, so dass keine entsprechenden Aussteifungen im Fußbodenbereich notwendig sind. Es ist beispielsweise denkbar, dass sich mehrere solcher Profilbauteile 36 über die Decke des Frachtraums 34 erstrecken, so dass die erfindungsgemäße Anordnung 2 in vielen vorbestimmten Positionen in einem solchen Profilbauteil 36 abstützen kann.

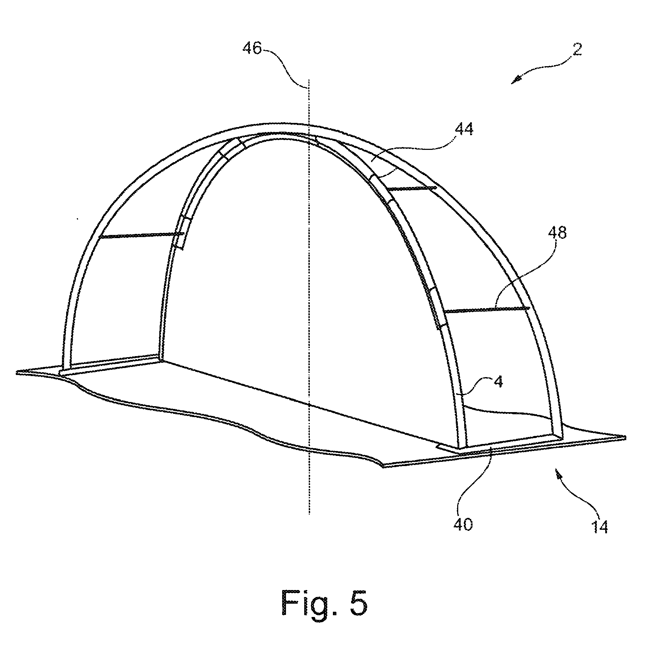

In Fig. 5 wird schließlich eine vorteilhafte Weiterbildung der erfindungsgemäßen Anordnung 2 dargestellt. Hier sind Befestigungsmittel 14 ersichtlich, die in Form von Adapterplatten 40 ausgeführt sind, welche mit einer Seite an dem Rahmen 4 und mit der anderen Seite beispielsweise am Fußbodenrost eines Frachtraums befestigt sind. Der Vorteil solcher Adapterplatten 40 ist, dass eine Befestigung der erfindungsgemäßen Anordnung 2 an Rahmenaufnahmen oder anderen Schnittstellen zu einer festen Struktur erfolgen kann, die nicht von anderen Einbauten - z.B. ein Frachtladesystem - genutzt werden. Alternativ zu Adapterplatten 40 können auch Gurte verwendet werden. Zusätzlich dazu befindet sich ein als Stabilisierungsbogen ausgeführter Stützrahmen 42 an der erfindungsgemäßen Anordnung 2, der um einen Winkel 44 zur Hochachse 46 verdreht angeordnet ist. Der Stützrahmen 42 ist ferner auf den Adapterplatten 40 montiert und dient dazu, dem Rahmen 4 eine Stabilität zu verleihen. Dazu ist der Stützrahmen 42 im oberen Scheitelpunkt des Rahmens 4 mit dem Rahmen 4 verbunden, so dass eine weitere Fixierung an der Frachtraumstruktur nicht erfolgen muss. Auf den Stützrahmen 42 kann dann verzichtet werden, wenn im Frachtraum eine Vorkehrung im Deckenbereich für die Stabilisierung des Rahmens 4 vorhanden ist, wie beispielsweise in Fig. 4 bereits gezeigt. Zwischen dem Stützrahmen 42 und dem Rahmen 4 können ferner Verbindungselemente 48 angeordnet sein, die den Rahmen 4 zusätzlich in Längsrichtung stützen. Diese zusätzlichen Verbindungselemente 48 können in Form von Stangen oder auch aus elastischen Gurten bestehen, deren Befestigung über Ösen, Hülsen oder dergleichen realisiert werden kann.

Der Bogen 4 und der Stützrahmen 42 bestehen bevorzugt aus einem elastischen Werkstoff, wie zum Beispiel Aluminium, ein Glasfaserwerkstoff oder ein Kohlefaserwerkstoff. Dadurch ist eine leichte Anpassung der Form des Rahmens 4 und des Stützrahmen 42 an dem jeweiligen Frachtraum möglich, wobei jedoch aufgrund vieler unterschiedlicher Flugzeugtypen und Frachtraumabmessungen für jeden Frachtraum ein speziell geformter Rahmen 4 bzw. Stützrahmen 42 vorbereitet werden muss. Es ist in diesem Sinne auch möglich, den Rahmen 4 und den Stützrahmen 42 plastisch vorzuformen, so dass die zusammengesetzten Segmente eines Rahmens 4 oder der Rahmen 4 als solches keine allzu großen Biegekräfte zum Anpassen erfordert.

### Bezugszeichen:

- 2: erfindungsgemäße Anordnung
- 4: Rahmen
- 6: Begrenzungsmittel
- 8: Befestigungsmittel
- 10: Fußboden
- 12: taschenartige Halterungen
- 14: Befestigungsmittel
- 16: abgeflachte Oberseite des Rahmens
- 18: Öse
- 20: Bohrung des Stifts
- 22: Stift
- 24: Verriegelungselement
- 26: Segment
- 28: Segment
- 30: Aufnahmehülse
- 32: Zugfeder
- 34: Frachtraum eines Flugzeugs
- 36: Profilbauteil
- 38: Längsrichtung
- 40: Adapterplatte
- 42: Stützrahmen
- 44: Winkel der Verdrehung zwischen Stützrahmen und Rahmen
- 46: Hochachse
- 48: Verbindungsmittel zwischen Stützrahmen und Rahmen

## Patentansprüche

1. Anordnung (2) zum Unterteilen eines Raums eines Flugzeugs in mehrere Bereiche, aufweisend
- mindestens einen formstabilen Rahmen (4) mit mindestens einem Befestigungsmittel (8) zum Haltern des Rahmens (4) in korrespondierenden Rahmenaufnahmen und
- mindestens ein faltbares und/oder rollbares Begrenzungsmittel (6),
**dadurch gekennzeichnet, dass** der Rahmen (4)aus mehreren Segmenten (26, 28) gebildet ist, die sich zum Transport des Rahmens (4) voneinander trennen lassen, dass der Rahmen (4) so ausgebildet ist, dass sich die Anordnung (2) im befestigten Zustand an eine oder mehrere Wände des Raums anschmiegt, und
dass sich das Begrenzungsmittel (6) an dem Rahmen (4) haltern lässt und eine Luftströmung zwischen durch die Anordnung (2) separierter benachbarter Bereiche des Raums verhindert.

2. Anordnung (2) nach Anspruch 1, wobei die Rahmenaufnahmen im Bereich des Bodens (10) des Raums angeordnet sind.

3. Anordnung (2) nach einem der vorhergehenden Ansprüche, wobei der Boden (10) des Raums Schienen zum Befestigen von Gegenständen aufweist, in denen sich die Rahmenaufnahmen einbringen und befestigen lassen.

4. Anordnung (2) nach einem der vorhergehenden Ansprüche, wobei der Rahmen (4) elastisch ausgeführt ist.

5. Anordnung (2) nach einem der vorhergehenden Ansprüche, aufweisend einen Stützrahmen (42), der gegenüber dem Rahmen (4) versetzt angeordnet ist.

6. Anordnung (2) nach Anspruch 5, wobei der Stützrahmen (42) um eine im Raum verlaufende Hochachse (46) relativ zum Rahmen (4) um einen vorbestimmten Winkel (44) rotiert angeordnet ist.

7. Anordnung (2) nach einem der Ansprüche 5 oder 6, wobei der Stützrahmen (42) mit dem Rahmen (4) verbunden ist.

8. Anordnung (2) nach einem der vorhergehenden Ansprüche, wobei der Rahmen (4) dazu eingerichtet ist, sich zum Abstützen zumindest bereichsweise in mindestens ein Halterelement einbringen zu lassen, welches innerhalb des Raums angeordnet ist.

9. Anordnung (2) nach Anspruch 8, wobei das Halterelement als ein Profilbauteil (36) mit einer Vertiefung ausgeführt ist.

10. Anordnung (2) nach einem der vorhergehenden Ansprüche, wobei das Begrenzungsmittel (6) aus einem Textil, einem textilartigen Material, einer Folie, einer Plane oder einem anderen roll- und/oder faltbaren Material ausgebildet ist.

11. Anordnung (2) nach einem der vorhergehenden Ansprüche, wobei das Begrenzungsmittel (6) Schlaufen, Taschen (12), Röhren oder dergleichen zum Befestigen des Begrenzungsmittels (6) an dem Rahmen (4) durch bereichsweises Einführen des Rahmens (4) aufweist.

12. Verwendung einer Anordnung (2) nach einem der Ansprüche 1-11 in einem Flugzeug.

13. Flugzeug mit mindestens einem Frachtraum und mindestens einer Anordnung (2) nach einem der Ansprüche 1 bis 11 zum Unterteilen des Frachtraums in mehrere Bereiche.

## Claims

1. An assembly (2) for separating a space of an aircraft into multiple areas, comprising
- at least one dimensionally stable frame (4) with at least one fastening means (8) for holding the frame (4) in corresponding frame receiving devices, and
- at least one foldable and/or rollable delimiting means,
**characterized in that** the frame (4) comprises several segments (26, 28) that are separatable from each other for transporting the frame (4),
**in that** the frame (4) is designed in such a manner that in its attached state the assembly (2) conforms to one or several walls of the space, and
**in that** the delimiting means (6) is holdable to the frame (4) and prevents any airflow between adjacent areas of the space that are separated by the assembly (2).

2. The assembly (2) of claim 1, wherein the frame receiving devices are arranged in the region of the floor (10) of the space.

3. The assembly (2) of one of the preceding claims, wherein the floor (10) of the space comprises rails for fastening objects, in which rails the frame receiving devices are be placeable and fastenable.

4. The assembly (2) of one of the preceding claims, wherein the frame (4) is designed so as to be elastic.

5. The assembly (2) of one of the preceding claims, comprising a supporting frame (42) that is arranged so as to be offset relative to the frame (4).

6. The assembly (2) of claim 5, wherein the supporting frame (42) is arranged relative to the frame (4) so as to be rotated by a predetermined angle (44) on a vertical axis (46) extending in the space.

7. The assembly (2) of one of claims 5 or 6, wherein the supporting frame (42) is connected to the frame (4).

8. The assembly (2) of one of the preceding claims, wherein the frame (4) is adapted, for support at least in some regions, to be inserted into at least one holder element that is arranged within the space.

9. The assembly (2) of claim 8, wherein the holder element is designed as a profile component (36) comprising an indentation.

10. The assembly (2) of one of the preceding claims, wherein the delimiting means (6) comprises a textile material, a textile-like material, a film or foil, a canvas or some other rollable and/or foldable material.

11. The assembly (2) of one of the preceding claims, wherein the delimiting means (6) comprises loops, pockets (12), tubes or the like for attaching the delimiting means (6) to the frame (4) by inserting the frame (4) in some regions.

12. The use of an assembly (2) of one of claims 1-11 in an aircraft.

13. An aircraft having at least one cargo compartment and at least one assembly (2) according to one of the claims 1 to 11.

## Revendications

1. Agencement (2) pour diviser un espace d'un avion en plusieurs zones, comprenant
- au moins un cadre (4) indéformable avec au moins un moyen de fixation (8) pour fixer le cadre (4) dans des logements de cadre correspondants et
- au moins un moyen de délimitation (6) pliable et/ou enroulable,
**caractérisé en ce que** le cadre (4) est formé de plusieurs segments (26, 28), qui peuvent être séparés les uns des autres pour le transport du cadre (4), que le cadre (4) est réalisé de sorte que l'agencement (2) s'adapte, dans l'état de fixation, à une ou plusieurs parois de l'espace,
et que le moyen de délimitation (6) peut être fixé sur le cadre (4) et empêche un écoulement d'air entre des zones voisines de l'espace, séparées par l'agencement (2).

2. Agencement (2) selon la revendication 1, dans lequel les logements de cadre sont disposés dans la zone du plancher (10) de l'espace.

3. Agencement (2) selon l'une des revendications précédentes, dans lequel le plancher (10) de l'espace présente des rails pour la fixation d'objets, dans lesquels peuvent être introduits et fixés les logements de cadre.

4. Agencement (2) selon l'une des revendications précédentes, dans lequel le cadre (4) a une réalisation élastique.

5. Agencement (2) selon l'une des revendications précédentes, comprenant un cadre d'appui (42) disposé en vis à vis par rapport au cadre (4).

6. Agencement (2) selon la revendication 5, dans lequel le cadre d'appui (42) est disposé en rotation par rapport au cadre (4), d'un angle prédéfini (44), autour d'un axe vertical (46) s'étendant dans l'espace.

7. Agencement (2) selon l'une des revendications 5 ou 6, dans lequel le cadre d'appui (42) est assemblé avec le cadre (4).

8. Agencement (2) selon l'une des revendications précédentes, dans lequel le cadre (4) est conçu pour pouvoir s'introduire, pour le support au moins par zones, dans au moins un élément de maintien disposé à l'intérieur de l'espace.

9. Agencement (2) selon la revendication 8, dans lequel l'élément de fixation est réalisé sous forme d'un composant profilé (36) avec un creux.

10. Agencement (2) selon l'une des revendications précé-dentes, dans lequel le moyen de délimitation (6) est formé d'un textile, d'un matériau de type textile, d'une feuille, d'une bâche ou d'un autre matériau enroulable et/ou pliable.

11. Agencement (2) selon l'une des revendications précédentes, dans lequel le moyen de délimitation (6) présente des boucles, des poches (12) des tubes ou analogues, pour la fixation du moyen de délimitation (6) sur le cadre (4) par introduction par zones du cadre (4).

12. Utilisation d'un agencement (2) selon l'une des revendications 1 - 11 dans un avion.

13. Avion avec au moins une soute et au moins un agencement (2) selon l'une des revendications 1 à 11 pour diviser la soute en plusieurs zones.
